(19) **Europäisches Patentamt European Patent Office Office européen des brevets**

(11) **EP 4 045 542 B1**

(12) **FASCICULE DE BREVET EUROPEEN**

(45) Date de publication et mention de la délivrance du brevet:
**13.03.2024 Bulletin 2024/11**

(21) Numéro de dépôt: **20803220.1**

(22) Date de dépôt: **16.10.2020**

(51) Classification Internationale des Brevets (IPC):
***C08B 30/02*** *(2006.01)*   ***C08B 30/08*** *(2006.01)*
***C08B 30/10*** *(2006.01)*

(52) Classification Coopérative des Brevets (CPC):
**C08B 30/02; C08B 30/08; C08B 30/10**

(86) Numéro de dépôt international:
**PCT/FR2020/051860**

(87) Numéro de publication internationale:
**WO 2021/074548 (22.04.2021 Gazette 2021/16)**

(54) **CORN STEEP SOLUBLE**

LÖSLICHES MAISQUELLWASSER

SOLUBLE CORN STEEP LIQUOR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **18.10.2019 FR 1911683**

(43) Date de publication de la demande:
**24.08.2022 Bulletin 2022/34**

(73) Titulaire: **ROQUETTE FRERES**
**62136 Lestrem (FR)**

(72) Inventeurs:
• **BOIT, Baptiste**
**59253 LA GORGUE (FR)**
• **RAMETTE, Matthieu**
**62000 ARRAS (FR)**
• **SALOME, Antoine**
**62580 WILLERVAL (FR)**
• **BUQUET, Fabrice**
**59173 RENESCURE (FR)**

(74) Mandataire: **Plasseraud IP**
**66, rue de la Chaussée d'Antin**
**75440 Paris Cedex 09 (FR)**

(56) Documents cités:
**EP-A1- 1 043 337     CN-A- 105 949 276**

**Description**

**Domaine technique**

La présente invention concerne un procédé de traitement d'une solution de corn-steep permettant d'obtenir une solution de corn steep pouvant être facilement atomisée et restant soluble après stérilisation. La présente invention concerne également le corn steep pulvérulent susceptible d'être obtenu par ce procédé.

**Technique antérieure**

Le corn-steep, terme fréquemment utilisé par l'homme de l'art, désigne les eaux de trempage concentrées résultant de la trempe du maïs.

La trempe du maïs dans l'eau constitue la première étape de l'extraction de l'amidon en amidonnerie humide. Cette trempe permet le gonflement des grains de maïs et l'élimination de matières solubles hautement fermentescibles contenues dans ces grains. Elle consiste à maintenir le maïs placé dans des silos pendant un temps donné au sein d'une eau chaude contenant une faible quantité d'anhydride sulfureux, ceci afin de faciliter la séparation ultérieure protéine-cellulose-amidon, et d'empêcher par ailleurs la croissance de microorganismes indésirables.

Deux phénomènes essentiels se déroulent simultanément au cours de la trempe : le premier consiste en une diffusion des matières solubles du grain de maïs vers l'eau de trempe, alors que la deuxième consiste en une fermentation de ces matières solubles dans l'eau de trempe par des bactéries lactiques, les conditions de trempe (présence de sulfites, de sucres réducteurs, température) étant favorables au développement rapide de cette flore bactérienne.

Le principal intérêt de ces eaux de trempe concentrées, appelées couramment corn-steep par l'homme du métier, tient à leur composition en matières nutritives essentielles, issues du transfert des matières solubles du grain. Ces matières nutritives constituent des facteurs favorables à la croissance des microorganismes comme à la production de métabolites secondaires, et font du corn-steep une source idéale de substances nutritives dans les industries de fermentation.

En effet, le corn-steep constitue une source d'azote organique de choix par la répartition et les formes de ses acides aminés : libres, peptidiques, protéiques ainsi qu'une source de carbone (acide lactique) et de phosphate (acide phytique) à effet retard. Une teneur importante en vitamines et oligo-éléments complète l'intérêt que représente le corn-steep comme source nutritive pour la croissance de microorganismes et l'induction de métabolites secondaires lorsque le corn-steep est associé à une ou plusieurs sources de carbone (glucose, maltodextrine, amidon, saccharose....).

En outre, il constitue une source nutritive relativement peu coûteuse, comparativement aux extraits de levures qui représentent la matière de référence dans ce domaine, et qui sont utilisés également en alimentation humaine et animale.

Par ailleurs, il est connu que l'utilisation du corn-steep en remplacement des sources d'azote complexes telles que les protéines de coton ou de soja, permet d'augmenter de manière substantielle les rendements de production d'antibiotiques.

Cependant, le corn-steep sous forme liquide pose des problèmes de décantation au cours du temps, ce qui est particulièrement gênant pour le transport, le stockage et le pompage du produit. Celui-ci doit être stocké en cuves agitées, thermostatées pour limiter l'évolution de sa composition. Ceci est d'autant plus vrai lorsque le corn-steep est consommé par petites quantités à la fois par certaines industries de fermentation. Il est dans ce cas particulièrement important de maîtriser sa conservation. L'obtention de formes sèches de corn-steep a alors été envisagée.

Le séchage par atomisation de solution de corn-steep est la technologie majoritairement utilisée. Cette technique, très largement répandue dans l'industrie, a permis le séchage de produits réputés difficiles à sécher, tels que les produits thermosensibles ou fortement hygroscopiques. Cependant, dans le cas du corn-steep, l'homme de l'art s'est heurté à des problèmes de collage. En effet, si le séchage de certains produits ne pose aucun problème, c'est à dire que la poudre sort régulièrement de la chambre ou tour de séchage et présente un aspect et des propriétés d'écoulement satisfaisants, en revanche la solution de corn-steep, riche en acides aminés et en substances hygroscopiques, est sujet au collage.

Ce collage se manifeste par des dépôts à différents niveaux de la chambre de séchage et des matériels annexes, dépôts qui génèrent des pertes et une dégradation du produit, qui peuvent nécessiter des arrêts de fabrication avec des cycles de nettoyage coûteux, en temps, en matière et en main d'oeuvre. Le collage peut aussi survenir en aval du séchage lorsque la poudre après une durée de stockage plus ou moins longue perd sa fluidité et forme des mottes.

Il est donc très difficile d'atomiser du corn-steep, en raison de la nature particulièrement hygroscopique des acides organiques et des sels qu'il contient, et en particulier du lactate de potassium présent en forte proportion (WRIGHT K.N. Nutritionnal properties and feeding value of corn and its by-products. In : Corn Chemistry and Technology. pp 447-478 WATSON, S. A. et RAMSTAD P. S. (Eds). Amer. Assoc. Cereal Chem., St Paul, MN, USA)

La demanderesse a déjà travaillé cette problématique et proposé une solution décrite dans le brevet EP1043337.

De manière avantageuse, le corn-steep pulvérulent selon EP1043337 comprend une teneur en ions métalliques comprise entre 1 et 5% en poids (sec/sec). Cet ajout de sels métalliques permet de faciliter l'atomisation du corn steep sans collage. De ce fait, les qualités nutritives du corn-steep pulvérulent selon l'invention s'en trouvent non seulement préservées, mais aussi améliorées. On comprend alors que ces qualités nutritives, alliées à la facilité de stockage et de mise en oeuvre soient un avantage indéniable, par exemple dans la préparation de milieux de culture destinés à l'industrie de la fermentation.

Afin d'être utilisé dans les industries de la fermentation, ce corn steep atomisé doit être remis en solution dans un solvant aqueux avec l'ensemble des nutriments destinés à être métabolisés par la souche microbienne que l'on souhaite produire. Lors de la remise en suspension, un précipité pouvant atteindre jusqu'à 15% de la matière sèche apparait.

La quantité de précipité est amplifiée par l'étape suivante de stérilisation du milieu de fermentation. Cette étape, visant à éliminer les microorganismes non désirés en appliquant un chauffage, va en effet provoquer l'apparition massive de particules insolubles, pouvant représenter jusqu'à 30% de la matière sèche.

Cette problématique a également été travaillée, en particulier dans le mémoire de master de Govender E « The purification of corn steep liquor as a fermentation feedstock by ultrafiltration» publié en 2010. Govender E propose plusieurs solutions consistant en différents prétraitements tels que la rectification du pH du corn steep à 7 avec l'ajout d'hydroxyde d'ammonium, l'utilisation d'un décanteur centrifuge ou de « giratory screens ». Ces prétraitements de solution de corn steep sont ensuite suivis d'une étape d'ultrafiltration. Cependant, bien que la rectification du pH à 7 permet de réduire les précipités dans le corn steep après stérilisation, une grande partie des nutriments sont éliminés par ce prétraitement et ce corn steep n'est pas recommandé pour la fermentation.

L'homme du métier est toujours dans l'attente d'un procédé permettant la production d'une solution de corn steep pouvant être facilement atomisée et restant soluble après stérilisation et pouvant être utilisée pour la fermentation.

Il est du mérite de la demanderesse d'avoir travaillé à l'ensemble de ces problématiques et trouvé la solution inventive qui va être décrite plus précisément dans les chapitres suivants.

## Résumé

L'invention consiste en un procédé de traitement d'une solution de corn steep comprenant les étapes suivantes : a) ajout de sels de cations divalents neutres, de préférence les sels de magnésium ou de calcium, encore préférentiellement le sulfate de calcium ou le sulfate de magnésium à la solution de corn steep; b) ajustement du pH de la solution de corn steep entre 6 et 8, de préférence par l'ajout d'hydroxyde de potassium ou d'hydroxyde d'ammonium ; c) séparation de la phase liquide et solide de la solution obtenue dans l'étape b) ; d) séchage de la phase liquide obtenue dans l'étape c), de préférence par atomisation afin d'obtenir un corn steep pulvérulent. De préférence, les sels de cations divalents neutres sont ajoutés à la solution de corn steep qui est portée à une température comprise entre 20 et 60°C. La séparation de la phase liquide et solide de l'étape c) est réalisée de préférence par centrifugation à assiettes. La quantité de sels divalents est de préférence comprise entre 0,5 et 3,5 mol/kg de matière sèche de la solution de corn-steep, de préférence entre 1 et 3 mol/kg de matière sèche de la solution de corn-steep, encore plus préférentiellement 1,5 mol/kg de matière sèche de la solution de corn-steep.

Dans un autre aspect, l'invention concerne un corn steep pulvérulent susceptible d'être obtenu par le procédé tel que décrit précédemment. De préférence, le corn steep pulvérulent est caractérisée en ce que la quantité de protéine est comprise entre 20 et 40%, de préférence entre 27 et 33% du poids des matières sèches du corn steep pulvérulent. L'invention sera mieux comprise à l'aide de la description détaillée qui suit dans les chapitres suivants.

## Brève description des dessins

D'autres caractéristiques, détails et avantages apparaîtront à la lecture de la description détaillée ci-après, et à l'analyse des dessins annexés, sur lesquels :

Fig. 1

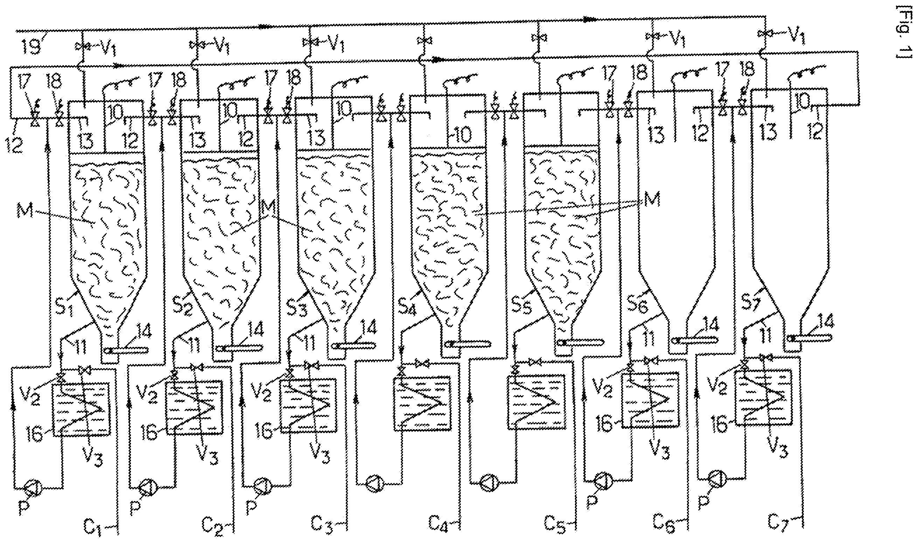

[Fig. 1] montre le procédé expérimental permettant de générer la solution de corn steep.

Fig. 2

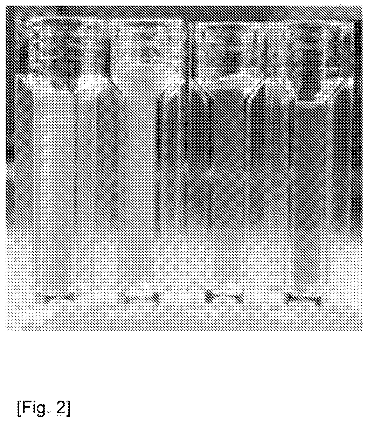

[Fig. 2] montre une photographie des solutions de corn steep obtenues dans les différents exemples (de gauche à droite : exemple 1, 2, 4 et 3).

## Description des modes de réalisation

Par « sels de cations divalents neutres », on entend tout composé ionique composé de cations divalents c'est-à-dire possédant une charge électrique positive de deux unités et d'anions formant un produit sans charge électrique nette.

Le sel de cation divalent est dit neutre quand ledit sel n'influence pas le pH de la solution lorsqu'il est dissous.

Par « corn steep » ou « solution de corn steep », on entend au sens de la présente invention la fraction liquide constituée des eaux de trempe issue des silos de trempage des grains de maïs. La fraction liquide non concentrée, a de préférence une matière sèche avoisinant les 15 % et a une richesse en azote protéique exprimée en N6,25 d'environ 45% du poids de la matière sèche, contenant de l'acide pythique à une teneur de 9 à 10% du poids de la matière sèche, de l'acide lactique à une teneur de 25% et 30 % du poids de la matière sèche et des cendres à une teneur d'environ 15 à 20 % du poids de la matière sèche.

Par « pulvérulent », on entend au sens de la présente invention, un produit ayant une matière sèche supérieure à 95%, caractérisé par un profil de granulométrie, une densité aérée voire tassée. La poudre est issue d'une étape de séchage telle l'atomisation (simple ou multiple effet, ou atomiseur avec post séchage à bande).

Par « solubilité », on entend au sens de la présente invention, la capacité d'un solide à se dissoudre dans un solvant liquide avec absence de particules insolubles ou de turbidité.

Par « stérilisation », On entend au sens de la présente invention, l'étape du procédé visant à éliminer tout microorganisme d'une préparation. Cette technique consiste à porter à haute température, par exemple entre 100 et 180 °C, en particulier au moins 121°C pendant au moins 20 minutes.

Le pourcentage de particules insolubles est préférentiellement mesuré à l'aide du Test A décrit ci-après :

- Le corn-steep est tout d'abord rectifié à pH 7 +/-0,5 avec HCl et NaOH.
- 200g du corn-steep sont introduits dans un erlenmeyer de 500ml bouché à l'aide d'un bouchon en mousse recouvert d'un film d'aluminium.
- L'erlenmeyer est stérilisé à l'aide d'une autoclave à vapeur humide, en respectant un barème de 20 min à 121°C.
- Le corn-steep est ensuite filtré sur un filtre en acétate de cellulose d'une porosité de 0,22 microns, dont le poids est connu.
- Le filtre est séché par lyophilisation, puis son poids est mesuré.

Pourcentage de particules insolubles (en %) = ((poids filtre final seché – poids filtre initial) / poids initial de la solution de corn steep) * 100.

La présente demande a pour objet un procédé de traitement d'une solution de corn steep permettant d'obtenir un corn steep pouvant être facilement atomisé et restant soluble après stérilisation comprenant les étapes suivantes :

- a) ajout d'un sel de cations divalents neutre à la solution de corn steep;
- b) ajustement du pH de la solution de corn steep entre 6 et 8;
- c) séparation de la phase liquide et solide de la solution obtenue dans l'étape b) ;
- d) séchage de la phase liquide obtenue dans l'étape c) afin d'obtenir un corn steep pulvérulent.

La première étape du procédé consiste en l'ajout d'un sel de cations divalents neutre à la solution de corn steep. A cet effet, toute solution de corn steep commerciale peut être utilisée.

De manière préférée, la solution de corn steep est produite en partant de grains de maïs en réalisant un procédé classique de l'état de l'art connu comme la « trempe » du maïs. Comme précédemment décrit en introduction, la trempe du maïs dans l'eau constitue la première étape de l'extraction de l'amidon en amidonnerie humide. Cette trempe permet le gonflement des grains de maïs et l'élimination de matières solubles hautement fermentescibles contenues dans ces grains. Elle consiste à maintenir le maïs placé dans des silos pendant un temps donné au sein d'une eau chaude contenant une faible quantité d'anhydride sulfureux, ceci afin de faciliter la séparation ultérieure protéines-cellulose-amidon, et d'empêcher par ailleurs la croissance de microorganismes indésirables.

Deux phénomènes essentiels se déroulent simultanément au cours de la trempe : le premier consiste en une diffusion des matières solubles du grain de maïs vers l'eau de trempe, alors que la deuxième consiste en une fermentation de ces matières solubles dans l'eau de trempe par des bactéries lactiques, les conditions de trempe (présence de sulfites, de sucres réducteurs, température) étant favorables au développement rapide de cette flore bactérienne.

De manière préférée, l'homme du métier pourra utiliser l'enseignement du brevet US 4.359.528 ou encore ceux décrits dans les demandes de brevets EP 724841 et EP 819702 appartenant à la demanderesse.

De préférence, la matière sèche de la solution de corn steep est comprise entre 5% et 25% de matière sèche, préférentiellement entre 10% et 20%, encore plus préférentiellement 15%.

Un sel de cations divalents neutre est ajouté à la solution de corn steep.

De manière préférée, les sels de magnésium ou de calcium sont utilisés. Afin d'éviter l'apparition d'un précipité salin blanchâtre contenant entre autres du phosphate tri-calcique dans un milieu de fermentation contenant du phosphore et/ou du potassium, les sels de magnésium sont préférés. Parmi les sels de magnésiums neutres, le sulfate de magnésium est largement préféré.

La quantité de sels de cations divalents neutres, préférentiellement de sels de magnésium, encore plus préférentiellement de sulfate de magnésium, ajoutée à la solution de corn-steep est comprise entre 0,5 et 3,5 mol/kg de matière sèche de la solution de corn-steep, de préférence entre 1 et 3 mol/kg de matière sèche de la solution de corn-steep, encore plus préférentiellement 1,5 mol/kg de matière sèche de la solution de corn-steep. La quantité de sels de cations divalents neutres s'entend dans la présente invention comme la quantité de sel anhydre.

Une quantité de sels supplémentaire peut-être ajoutée. Le produit fonctionnera de la même manière avec une stabilité à la stérilisation et une performance de fermentation. Cependant, la teneur en sel accrue est un handicap pour les industriels de la fermentation.

De manière encore plus préférée, la concentration de sulfate de magnésium heptahydraté est comprise entre 4% et 8% en poids sec de sulfate de magnésium heptahydraté sur poids de corn steep sec, préférentiellement entre 4% et 6%, encore plus préférentiellement 4,5% .

Le sel de cations divalents neutre, préférentiellement des sels de magnésium neutres, encore plus préférentiellement de sulfate de magnésium, peut être ajouté à la solution de corn steep sous forme de poudre ou préalablement dilué dans un solvant aqueux.

Après ajout du sel de cations divalents, il est conseillé de réaliser une agitation permettant l'obtention d'une répartition homogène du sel de cations divalents neutre tel que défini précédemment dans la solution de corn-steep. Classiquement, cette agitation est réalisée dans un récipient adéquat (cuve, ...) équipé d'un système d'agitation p.e. un axe d'agitation équipé d'hélices.

L'ajout est préférentiellement réalisé en rectifiant la température de la solution de corn steep entre 20°c et 60°C, préférentiellement entre 30°C et 50°C, encore plus préférentiellement 40°C. Pour ce faire, tout système de régulation de la température peut être utilisé comme par exemple l'utilisation d'un échangeur thermique dit « serpentin » alimenté avec de l'eau chaude ou de la vapeur.

La deuxième étape du procédé de l'invention consiste en une neutralisation du pH de la solution de corn steep, c'est-à-dire en l'ajustement de la solution de corn steep à un pH compris entre 6 et 8, préférentiellement 6,5 et 7,5, encore plus préférentiellement 7.

Pour réaliser cette étape, l'homme du métier pourra ajouter à la solution de corn steep tout réactif basique bien connu de l'art antérieur.

De manière préférée, il choisira ce réactif basique dans le groupe constitué de l'hydroxyde de potassium et de l'hydroxyde d'ammonium. L'utilisation de l'hydroxyde d'ammonium est intéressante car elle permet d'apporter un peu plus d'azote pour la fermentation. En revanche, son utilisation donne un produit final dont le pH est légèrement plus acide ce qui nécessite une rectification pH initiale potentielle pour l'utilisateur. L'utilisation de l'hydroxyde de potassium permet d'éviter cette variation du pH final.

Comme pour la première étape, l'ajustement du pH est réalisé sous agitation en régulant la température de la solution. Le matériel sera de même nature que celui utilisé dans l'étape précédente (cuve agitée avec régulation de température).

Ainsi, dans un mode particulier, l'ajout du sel de magnésium de la première étape et l'ajustement du pH de la deuxième étape peuvent être réalisés de manière conjointe.

De manière préférée, la température de la solution de corn steep lors de l'ajustement du pH est comprise entre 15° et 25°C, préférentiellement 20°C.

De manière préférée, la solution de corn steep lors de l'ajustement du pH est soumise à une agitation afin de laisser les composés insolubles se former. Le temps d'agitation est de préférence compris entre 1 min et 60 min, préférentiellement entre 10 min et 50 min, encore plus préférentiellement entre 20 min et 40 min.

La troisième étape consiste en une séparation de la phase liquide et solide de la solution obtenue dans la précédente.

Pour ce faire, l'homme du métier utilise toute technique bien connue incluant la filtration (tangentielle, membranaire, frontale, ..) et la décantation (statique, centrifuge, ...).

De manière préférée, l'homme du métier utilisera la séparation centrifuge et en particulier la technologie des centrifugeuses dites à assiettes.

La phase solide également appelées boues ou sédiments, contiennent généralement entre 30% à 50% sec/sec de cendres minérales, le reste étant composé majoritairement d'acide phytique, d'acide lactique et de protéines. Ces boues contiennent environ 50% des protéines initialement contenues dans la solution de corn steep. Cette perte se justifie par une stabilité accrue de la fraction surnageant.

La phase liquide également appelée surnageant concentre le reste des composés solubles.

La phase liquide du corn steep liquide a une stabilité au traitement thermique améliorée, une atomisation facilitée. Les performances de fermentation sont par ailleurs maintenues lors de l'utilisation de cette phase liquide.

La dernière étape consiste au séchage de la phase liquide obtenue dans la précédente étape afin d'obtenir un corn steep pulvérulent.

Pour ce faire, l'homme du métier utilise toute technique bien connue dans l'art antérieur.

La Demanderesse a démontré que l'on pouvait avantageusement fabriquer le corn-steep pulvérulent conforme à l'invention, par exemple en utilisant une tour d'atomisation de type NIRO, de préférence en multi-effet.

On peut choisir avantageusement une température d'entrée d'air comprise entre 150 et 250°C, et des débits en matières entrantes tels que la température de l'air sortant de la tour soit comprise entre 60 et 100°C.

Le corn-steep pulvérulent obtenu selon le procédé conforme à l'invention peut être par la suite mis sous forme de comprimés par exemple sur presse alternative en présence de lubrifiant.

Dans un mode préféré, le pourcentage de matière sèche du corn steep pulvérulent selon l'invention est supérieur à 80%, préférentiellement supérieur à 85%, encore plus préférentiellement supérieur à 90%.

La matière sèche est mesurée à l'aide de tout protocole utilisable par l'homme du métier. De manière préférée, la méthode dite par dessication suivante est utilisée :

- On pèse l'échantillon au départ et on mesure une masse m1 en g.
- On évapore l'eau en plaçant l'échantillon dans une enceinte chauffée jusqu'à stabilisation de la masse de l'échantillon, l'eau étant complètement évaporée. De préférence, la température est de 105°c sous pression atmosphérique.
- On pèse l'échantillon final et on mesure une masse m2 en g
- Matière sèche = (m2 / m1) * 100

Dans un mode préféré, la teneur en protéines totales du corn steep pulvérulent est comprise entre 20% et 40%, préférentiellement 27% et 33%, les pourcentages étant entendus sur matière sèche.

La teneur en protéines totales peut être déterminée par tout protocole bien connu par l'homme du métier, comme par exemple le dosage de la quantité totale d'acides aminés. De manière préférentielle, on réalisera un dosage de l'azote total selon la méthode de Dumas et on multipliera la valeur par le coefficient 6,25.

L'invention a enfin trait à l'utilisation de ce corn-steep soluble dans toute industrie, en particulier dans les industries de la fermentation industrielle.

Le corn-steep pulvérulent conforme à l'invention peut avantageusement être employé en tant que substance nutritive dans la préparation de milieux de culture pour l'industrie de la fermentation. Il peut également être utilisé dans les domaines de l'alimentation, de la nutrition animale ou autres.

En plus de sa stabilité à la stérilisation et contrairement aux corn-steep pulvérulents de l'art antérieur, le corn-steep conforme à l'invention conserve ses caractéristiques biochimiques initiales. De plus, il possède la caractéristique avantageuse d'être compressible, ce qui est particulièrement intéressant dans la pratique industrielle, en raison des risques et inconvénients liés à la manipulation des poudres. D'autre part, la forme de comprimé permet un dosage minutieux dans la préparation de milieux de culture.

L'invention sera mieux comprise à l'aide des exemples qui suivent, lesquels ne se veulent pas limitatifs et font seulement état de certains modes de réalisations et de certaines propriétés avantageuses du corn-steep pulvérulent selon l'invention.

**Exemples**

Exemple 1 : Obtention de la solution de corn steep selon l'art antérieur EP0026125

On utilise pour produire le corn steep une batterie de silos (Figure 1) composée de sept silos S1 à S7 en inox, à fond filtrant, de 33 litres de volume total et de diamètre égal à 25 cm, pouvant être remplis de maïs M et équipés chacun :

- d'une sonde de niveau 10,
- d'une tuyauterie 11 reliant le fond d'un silo donné, d'une part, à la tête du silo suivant par une canalisation 12 et, d'autre part, à la tête du silo lui-même par une canalisation 13 assurant la recirculation de la phase liquide sur le silo lui-même ou vers le silo suivant, cette tuyauterie servant également à soutirer l'eau de trempe le moment voulu,
- d'une vanne de fond 14 à grand diamètre pour la vidange du maïs,
- de bain-marie 16 thermorégulé avec autant de pompes de circulation P assurant la circulation de la phase liquide d'un silo donné à travers le serpentin de chauffe vers le silo suivant ou vers la tête du silo considéré,
- sept jeux de deux électrovannes 17 et 18 placées respectivement sur les tuyauteries 12 et 13 et commandées par la sonde de niveau (assurant un recouvrement parfait du maïs et le déplacement du liquide tout au long de la batterie),
- une canalisation 19 d'arrivée d'eau sulfitée, ajustée à 1,5 g/L d'anhydride sulfureux, à partir de laquelle l'eau sulfitée est distribuée à un débit constant, assurant un taux de circulation (litres d'eau par kg de maïs) constant, successivement sur chaque silo, par l'ouverture de la vanne correspondante V1 ,

- une cuve non montrée de 20 litres réceptionnant l'eau de trempe des silos avant écrasage du maïs et reliée à chacun des silos par respectivement les canalisations C1 à C7 dérivées sur les canalisations 11 de chaque silo, l'orientation de l'eau de trempe sortant d'un silo donné vers la tuyauterie 11 ou la canalisation C étant assurée à l'aide de respectivement une vanne V2 et V3 ,
- un évaporateur non montré (du type commercialisé par KURT HERBERT Apparate- und Maschinenbau Lahr, Baden). Chaque jour, l'eau de trempe recueillie est évaporée à 50 % de matières sèches à l'aide de cet évaporateur sous vide, à une température inférieure à 60°C.

Le maïs travaillé est du maïs français, provenant des fournisseurs classiques de l'industrie amidonnière. Le temps de trempe choisi est de 40 heures et le taux de S02 est fixé à 1,5 g/litre.

La température est fixée à 48°C±1 tout au long de la batterie. Le temps de 40 heures est obtenu pour un travail sur cinq silos avec une vidange toutes les huit heures.

Le taux de circulation d'eau a progressivement été élevé de 0,8 à 1,0 - 1,5 et 1,8 litres d'eau par kg de maïs commercial.

On essaye de procéder ensuite à l'atomisation du corn-steep ou eau de trempe ainsi obtenue dans une tour NIRO dans les conditions suivantes : température d'entrée 200°C - température de sortie 96°C - vitesse de turbine : 15.000 tours/minute - capacité d'évaporation : 80 litres/heure

Impossible, même en faisant varier les paramètres, d'obtenir une atomisation satisfaisante. La poudre colle fort et vite sur la chambre d'atomisation, créant une couche de produit. L'atomisation est vite perturbée par cette couche de produit, et ne peut être maintenue sur la durée. Une industrialisation est impossible à envisager.

Exemple 2 : Traitement de la solution de corn steep avec un sel de cations divalents.

On prépare une solution corn-steep à 50% de matière sèche en mettant en oeuvre le procédé décrit dans l'exemple 1, puis en le concentrant à l'aide d'un évaporateur sous vide. On ajoute à celui-ci 3,2% en poids (sec/sec) de sel de cations divalents MgO sous forme d'une suspension à 100g/l dans une cuve thermostatée à 50°C, sous agitation.

Le pH du corn-steep liquide enrichi en MgO ainsi obtenu est de 5,7.

On procède ensuite à l'atomisation dans une tour NIRO dans les conditions suivantes : température d'entrée 200°C - température de sortie 96°C - vitesse de turbine : 15.000 tours/minute - capacité d'évaporation : 80 litres/heure.

La teneur en acide lactique du corn-steep obtenu est de 14% en poids. Les particules ne collent pas sur les parois de la chambre d'atomisation. La poudre est dense et descend rapidement du cyclone.

Exemple 3 : Solution de corn steep soumise à une étape d'ajustement du pH à 7.

On prépare un corn-steep liquide à 50% de matière sèche en mettant en oeuvre le procédé décrit dans l'exemple 1.

On ajoute à celui-ci la quantité nécessaire d'hydroxyde d'ammonium (NH4OH) dans une cuve thermostatée à 50°C, sous agitation, afin d'atteindre un pH de 7.

Après 10 min d'agitation, le corn steep est envoyé sur une membrane d'ultrafiltration en PS, possédant un seuil de coupure de 30 KDa, placée dans un skid de filtration tangentielle.

On procède ensuite à l'atomisation dans une tour NIRO dans les conditions suivantes : température d'entrée 200°C - température de sortie 96°C - vitesse de turbine : 15.000 tours/minute - capacité d'évaporation : 80 litres/heure.

Il est impossible, même en faisant varier les paramètres, d'obtenir une atomisation satisfaisante. La poudre colle fort et vite sur la chambre d'atomisation, créant une couche de produit. L'atomisation est vite perturbée par cette couche de produit, et ne peut être maintenue sur la durée. Une industrialisation est impossible à envisager.

Exemple 4 : Traitement de la solution de corn steep selon l'invention

On prépare un corn-steep liquide à 50% de matière sèche en mettant en oeuvre le procédé décrit dans l'exemple 1.

Après dilution à 15%, on ajoute à celui-ci 5% p/p d'hydroxyde de potassium (50%) et 4,2% p/p de MgSO4 dans une cuve thermostatée à 40°C, sous agitation, afin d'atteindre un pH de 7. Une alternative consiste en l'ajout de 3,5% p/p d'hydroxyde d'ammonium (20,5%) et 4,2% p/p de MgSO4.

Après 10 min d'agitation, la solution de corn steep est refroidie à 20°C puis envoyée en alimentation d'une centrifugeuse à assiettes, Type Westfalia Separator NA7 en configuration « évacuation des sédiments en continu », donc en séparateur à buses. La séparatrice est équipée de 4 buses d'éjection de 0.3 mm. La vitesse du bol est de 8400 tr/mn, l'accélération est estimée à 6000 g environ. La séparatrice est alimentée à un débit d'environ 250L/h avec une contrepression à 0.5 bar.

Le surnageant est ensuite directement séché par atomisation. L'atomisation est réalisée dans une tour NIRO dans les conditions suivantes : température d'entrée 200°C - température de sortie 96°C - capacité d'évaporation : 20 litres/heure.

Exemple 5 : Comparaison de la stabilité à la stérilisation des différentes solutions de corn steep

On se propose de comparer la stabilité à la stérilisation des différents produits obtenus dans les exemples précédents. En effet, on peut voir une apparition de précipité insoluble dans le corn-steep de l'art antérieur lorsqu'il est soumis à un barème de stérilisation classique dans l'industrie de la fermentation. Le test pour comparer les différents échantillons est le suivant :

Le corn-steep est tout d'abord rectifié à pH 7 +/-0,5 avec HCl et NaOH.
On procède à une photographie dudit corn-steep.
Le pourcentage de particules insolubles est mesuré selon le test A suivant :

- 200 g du corn-steep sont introduits dans un erlenmeyer de 500ml bouché à l'aide d'un bouchon en mousse recouvert d'un film d'aluminium
- L'erlenmeyer est stérilisé à l'aide d'une autoclave à vapeur humide, en respectant un barème de 20 min à 121°C.
- Le corn-steep est ensuite filtré sur un filtre en acétate de cellulose d'une porosité de 0,22 microns dont le poids est connu.
- Le filtre est séché par lyophilisation, puis son poids est mesuré. Le filtre est taré, ce qui permet après séchage du filtre sous vide, d'évaluer la quantité d'insoluble apparu.

Le pourcentage de particules insolubles (en %) = ((poids filtre final seché – poids filtre initial) / poids initial de la solution de corn steep) * 100

On procède à une photographie du corn-steep filtre afin d'être comparé aux valeurs obtenues lors de l'étape 1.
Le Tableau 1 ci-dessous synthétise les performances relatives des différents corn-steep présentés dans les exemples ci-dessus:

[Tableau 1]

|  | Exemple 1 | Exemple 2 | Exemple 3 | Exemple 4 |
|---|---|---|---|---|
|  | Corn-steep classique | Corn-steep avec ajout MgO | Corn-steep avec ajout NH4OH et UF | Corn-steep avec ajout MgSO4, filtration |
| Atomisation (Ok / Pas OK) | Pas OK | Ok | Pas OK | Ok |
| Pourcentage de particules insolubles selon Test A (en %) | 15,60% | 12,30% | 0,80% | 0,40% |

Comme expliqué dans la partie description, le traitement de la solution de corn-steep selon l'invention est le seul à pouvoir permettre une atomisation facile de la solution tout en limitant l'apparition de précipité après stérilisation (moins de 1 % selon le Test décrit ci-dessus).

Exemple 6 : Comparaison de l'efficacité des différents corn-steep en fermentation

La souche référence est ici le Lactobacillus delbrueckii.
La pré-culture est réalisée dans 100ml de milieu MRS (Gélose de Ma, Rogosa et Sharpe) comprenant de la cystéine dans un Erlenmeyer de 250ml sous agitation, en anaérobie à 37°C et à pH 6,8-7.
Quand la pré-culture est finie, on ensemence dans un fermenteur de 3 litres, 1000 ml comprenant 50 g/L glucose, 3-1 g/L K2HPO4- KH2PO4, 0,5 g/L MgSO4,7H20 and 1 g/L Tween 80 en concentration finale.
La quantité de corn-steep est ensuite ajoutée (0,5g/l). La culture est réalisée à une température de 37°C avec un pH régulé à 6,4 au départ avec NaOH 5N, et des conditions anaerobiques avec inertage d'azote.

On réalise un comptage des colonies (réalisée par culture sur boite de pétri et exprimée en UFC/ml) lors de la fermentation afin de s'assurer des performances comparées des différentes solutions de corn steep produites dans les exemples ci-dessus. Le résultat du comptage est indiqué dans le Tableau 2 ci-dessous :

[Tableau 2]

| Temps de fermentation (h) | CornSteep Exemple 1 | CornSteep Exemple 2 | CornSteep Exemple 3 | CornSteep Exemple 4 |
|---|---|---|---|---|
| 0 | 4,77E+06 | 3,57E+06 | 3,66E+06 | 3,75E+06 |
| 4 | 2,30E+07 | 2,05E+07 | 1,25E+07 | 2,29E+07 |
| 8 | 1,21E+08 | 9,90E+07 | 7,22E+07 | 1,01E+08 |
| 23 | 3,57E+08 | 1,88E+08 | 1,00E+08 | 3,62E+08 |
| 28 | 4,00E+08 | 2,66E+08 | 1,12E+08 | 3,99E+08 |

**Revendications**

1.  Procédé de traitement d'une solution de corn steep comprenant les étapes suivantes :

    a) ajout de sels de cations divalents neutres à la solution de corn steep;
    b) ajustement du pH de la solution de corn steep entre 6 et 8;
    c) séparation de la phase liquide et solide de la solution obtenue dans l'étape b) ;
    d) Séchage de la phase liquide obtenue dans l'étape c) afin d'obtenir un corn steep pulvérulent.

2.  Procédé selon la revendication 1 **caractérisé en ce que** les sels de cations divalents neutres sont des sels de magnésium ou de calcium, préférentiellement le sulfate de calcium ou le sulfate de magnésium.

3.  Procédé selon la revendication 1 ou 2 **caractérisé en ce que** les sels de cations divalents neutres sont ajoutés à la solution de corn steep portée à une température comprise entre 20 et 60°C.

4.  Procédé selon l'une quelconque des revendications 1 à 3 **caractérisé en ce que** le pH est ajusté entre 6 et 8 par l'ajout d'hydroxyde de potassium ou d'hydroxyde d'ammonium.

5.  Procédé selon l'une quelconque des revendications 1 à 4 **caractérisé en ce que** la séparation de la phase liquide et solide de l'étape c) est réalisée par centrifugation à assiettes.

6.  Procédé selon l'une quelconque des revendications 1 à 5 **caractérisé en ce que** le séchage de l'étape d) est réalisé pas atomisation.

7.  Procédé selon l'une quelconque des revendications 1 à 6 **caractérisé en ce que** la quantité de sels divalents est comprise entre 0.5 et 3.5 mol/kg de matière sèche de la solution de corn-steep, de préférence entre 1 et 3 mol/kg de matière sèche de la solution de corn-steep, encore plus préférentiellement 1,5 mol/kg de matière sèche de la solution de corn-steep.

8.  Corn steep pulvérulent susceptible d'être obtenu par le procédé selon l'une quelconque des revendications 1 à 7.

9.  Corn steep pulvérulent selon la revendication 8 **caractérisée en ce que** la quantité de protéine est comprise entre 20 et 40%, de préférence entre 27 et 33% du poids des matières sèches du corn steep pulvérulent.

**Patentansprüche**

1.  Verfahren zur Behandlung einer Corn Steep-Lösung, welches die folgenden Schritte umfasst:

    a. Zugabe von neutralen Salzen zweiwertiger Kationen zu der Corn Steep-Lösung;
    b. Einstellen des pH-Werts der Corn Steep-Lösung auf einen Wert zwischen 6 und 8;

c. Trennung der flüssigen und festen Phase der in Schritt b) erhaltenen Lösung;
d. Trocknen der in Schritt c) erhaltenen flüssigen Phase, um ein pulverförmiges Corn Steep zu erhalten.

**2.** Verfahren nach Anspruch 1, **dadurch gekennzeichnet, dass** die neutralen Salze zweiwertiger Kationen Magnesium- oder Calciumsalze sind, bevorzugt Calciumsulfat oder Magnesiumsulfat.

**3.** Verfahren nach Anspruch 1 oder 2, **dadurch gekennzeichnet, dass** die neutralen Salze zweiwertiger Kationen zu der auf 20 bis 60 °C erhitzten Corn Steep-Lösung gegeben werden.

**4.** Verfahren nach einem der Ansprüche 1 bis 3, **dadurch gekennzeichnet, dass** der pH-Wert durch Zugabe von Kaliumhydroxid oder Ammoniumhydroxid auf einen Wert zwischen 6 und 8 eingestellt wird.

**5.** Verfahren nach einem der Ansprüche 1 bis 4, **dadurch gekennzeichnet, dass** die Trennung der flüssigen und festen Phase in Schritt c) durch Tellerzentrifugation erfolgt.

**6.** Verfahren nach einem der Ansprüche 1 bis 5, **dadurch gekennzeichnet, dass** die Trocknung in Schritt d) durch Sprühtrocknung erfolgt.

**7.** Verfahren nach einem der Ansprüche 1 bis 6, **dadurch gekennzeichnet, dass** die Menge an zweiwertigen Salzen zwischen 0,5 und 3,5 mol/kg Trockenmasse der Corn Steep-Lösung, bevorzugt zwischen 1 und 3 mol/kg Trockenmasse der Corn Steep-Lösung, stärker bevorzugt bei 1,5 mol/kg Trockenmasse der Corn Steep-Lösung liegt.

**8.** Pulverförmiges Corn Steep, das durch das Verfahren nach einem der Ansprüche 1 bis 7 erhalten werden kann.

**9.** Pulverförmiges Corn Steep nach Anspruch 8, **dadurch gekennzeichnet, dass** die Proteinmenge zwischen 20 und 40 Gew.-%, bevorzugt zwischen 27 und 33 Gew.-% der Trockenmasse des pulverförmigen Corn Steep liegt.

**Claims**

**1.** Process for treating a corn steep solution, comprising the following steps:

a) adding neutral salts of divalent cations to the corn steep solution;
b) adjusting the pH of the corn steep solution to between 6 and 8;
c) separating the liquid and solid phases of the solution obtained in step b);
d) drying the liquid phase obtained in step c) in order to obtain a corn steep powder.

**2.** Process according to claim 1, **characterised in that** the neutral salts of divalent cations are magnesium or calcium salts, preferably calcium sulfate or magnesium sulfate.

**3.** Process according to claim 1 or 2, **characterised in that** the neutral salts of divalent cations are added to the corn steep solution brought to a temperature of between 20 and 60°C.

**4.** Process according to any one of claims 1 to 3, **characterised in that** the pH is adjusted to between 6 and 8 by adding potassium hydroxide or ammonium hydroxide.

**5.** Process according to any one of claims 1 to 4, **characterised in that** the separation of the liquid and solid phases in step c) is performed by plate centrifugation.

**6.** Process according to any one of claims 1 to 5, **characterised in that** the drying in step d) is performed by atomisation.

**7.** Process according to any one of claims 1 to 6, **characterised in that** the amount of divalent salts is between 0.5 and 3.5 mol/kg dry matter of the corn steep solution, preferably between 1 and 3 mol/kg dry matter of the corn steep solution, even more preferably 1.5 mol/kg dry matter of the corn steep solution.

**8.** Corn steep powder which can be obtained by the process according to any one of claims 1 to 7.

**9.** Corn steep powder according to claim 8, **characterised in that** the amount of protein is between 20% and 40%, preferably between 27% and 33% of the weight of dry matter of the corn steep powder.

[Fig. 1]

[Fig. 2]

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1043337 A
- US 4359528 A
- EP 724841 A
- EP 819702 A

**Littérature non-brevet citée dans la description**

- Nutritionnal properties and feeding value of corn and its by-products. **WRIGHT K.N.** Corn Chemistry and Technology. Amer. Assoc. Cereal Chem, 447-478
- **DE GOVENDER E.** *The purification of corn steep liquor as a fermentation feedstock by ultrafiltration,* 2010